# EUROPEAN PATENT APPLICATION

(11) **EP 2 180 394 A2**
(43) Date of publication of application: **28.04.2010**
(21) Application number: 09007363.6
(22) Date of filing: 03.06.2009
(51) Int. Cl.: G06F 1/32

(54) **Embedded system with powersaving functions and powersaving method thereof**

(30) Priority: 27.10.2008 TW 97141162
(71) Applicant: ZyXEL communications Corp., Hsinchu Science Park Hsin-Chu Hsien (TW)
(72) Inventor: Chen, Shih-Heng, Bade City, Taoyuan County (TW)
(74) Representative: Görz, Ingo

(57) **Abstract**

An embedded system (100, 200, 300, 400, 500, 600) with power-saving functions includes a central processing unit (110, 210, 410, 610), a detecting and controlling unit (120, 220), and a clock generating unit (130, 230, 330). The central processing unit (110, 210, 410, 610) is used for controlling operations of the embedded system (100, 200, 300, 400, 500, 600). The detecting and controlling unit (1 20, 220) is used for detecting a designated operating status of the central processing unit (110, 210, 610) to generate a control signal. The clock generating unit (130, 230, 330) is coupled to the detecting and controlling unit (120, 220) and the central processing unit (110, 210, 610) for setting a clock signal to the central processing unit (110, 210, 610) according to the control signal. The designated operating status includes a usage or a loading status of the central processing unit (110, 210, 610).

## Description

The present invention relates to an embedded system, and more particularly according to the pre-characterizing clauses of claims 1 and 10.

An embedded system, originally defined by the institution of electrical engineers (IEE), is an application combining software and hardware. Since personal computer (PC) technology has developed by leaps and bounds, mobile phones, information appliances (IAs), and personal digital assistants (PDAs) have become very common applications of embedded systems. In contrast to a PC, an embedded system has a specific use and function, and its hardware is specifically designed according to the function requirements.

When designing a portable product, the standby time of its battery is very important. Hence, the power management and power-saving design become very important. However, the designer of the embedded system must take account of not only the power consumption but also the manufacturing cost and the product efficiency.

This in mind, the present invention aims at providing an embedded system with power-saving functions and a related power-saving method.

This is achieved by an embedded system and a related power-saving method thereof according to claims 1 and 10. The dependent claims pertain to corresponding further developments and improvements.

As will be seen more clearly from the detailed descriptions following below, the claimed embedded system with power-saving functions includes a central processing unit, a detecting and controlling unit, and a clock generating unit. The central processing unit is used for controlling operations of the embedded system. The detecting and controlling unit is used for detecting a designated operating status of the central processing unit to generate a control signal. The clock generating unit is coupled to the detecting and controlling unit and the central processing unit for setting a clock signal to the central processing unit according to the control signal. The designated operating status includes a usage or a loading status of the central processing unit.

In addition or alternatively, as will be seen more clearly from the detailed description following below, the claimed embedded system with power-saving functions includes a central processing unit, a judging unit, and a power gating. The central processing unit controls operations of the embedded system. The judging unit determines whether a time that the central processing unit lies in an idle status is greater than a designated time to generate a judging result. The power gating includes a power control switch and a (second) detecting and controlling unit. The power control switch controls an input power of the central processing unit according to a (second) control signal. The detecting and controlling unit receives the judging result and generates the (second) control signal according to at least the judging result.

The claimed embedded system further preferably includes a network module or an infrared module for transmitting a wake-up signal.

Further, as will be seen more clearly from the detailed description following below, the claimed power-saving method applied to an embedded system includes the steps of detecting a designated operating status of a central processing unit of the embedded system to generate a control signal; and generating a clock signal to the central processing unit according to the control signal.

In addition or alternatively, as will be seen more clearly from the detailed description following below, the claimed power-saving method applied to an embedded system includes the steps of determining whether a time that the central processing unit lies in an idle status is greater than a designated time to generate a judging result; receiving the judging result and generating a (second) control signal according to at least the judging result; and controlling an input power of the central processing unit according to the (second) control signal.

In the following, the invention is further illustrated by way of example, tacking reference to the accompanying drawings. Thereof
- FIG.1: is a diagram illustrating an embedded system with power-saving functions according to a first embodiment of the present invention;
- FIG.2: is a diagram illustrating an embedded system with power-saving functions according to a second embodiment of the present invention;
- FIG.3: is a diagram illustrating an embedded system with power-saving functions according to a third embodiment of the present invention;
- FIG.4: is a diagram illustrating an embedded system with power-saving functions according to a fourth embodiment of the present invention;
- FIG.5: is a diagram illustrating an embedded system with power-saving functions according to a fifth embodiment of the present invention;
- FIG.6: is a diagram illustrating an embedded system with power-saving functions according to a sixth embodiment of the present invention;
- FIG.7: (including 7A, 7B, and 7C) is a diagram showing the power-saving mechanism of the embedded systems shown in FIG.1 to FIG.6;
- FIG.8: is a flowchart illustrating a power-saving method applied to an embedded system according to an exemplary embodiment of the present invention;
- FIG.9: is a flowchart illustrating a power-saving method applied to an embedded system according to another exemplary embodiment of the present invention; and
- FIG.10: is a table comparing the power consumption between the conventional embedded system and the embedded system disclosed in the present invention.

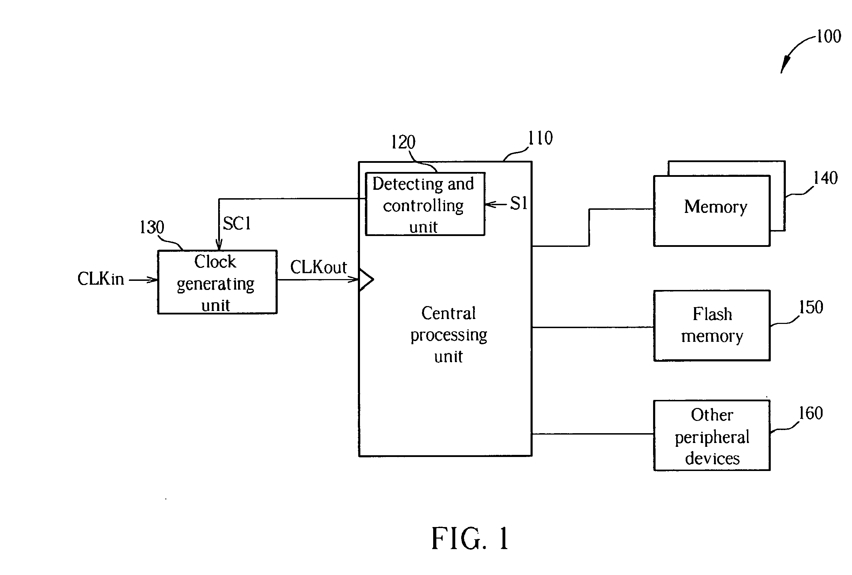

Please refer to FIG.1. FIG.1 is a diagram illustrating an embedded system 100 with power-saving functions according to a first embodiment of the present invention. The embedded system 100 includes, but is not limited to, a central processing unit 110, a detecting and controlling unit 120, and a clock generating unit 130. The central processing unit 110 is used for controlling operations of the embedded system 100, such as a memory 140, a flash memory 150, or other peripheral devices 160. In this embodiment, the detecting and controlling unit 120 is disposed inside the central processing unit 110 for detecting a designated operating status S1 of the central processing unit 110 to generate a control signal SC1. The clock generating unit 130 is coupled to the detecting and controlling unit 120 and the central processing unit 110 for setting a clock signal CLKout to the central processing unit 110 according to the control signal SC1.

Please note that the clock generating unit 130 can be implemented by a phase lock loop (PLL). Thus the clock generating unit 130 generates the clock signal CLKout according to an input clock signal CLKin and the control signal SC1. Please also note that the designated operating status S1 can include a usage or a loading status of the central processing unit 110, but the present invention is not limited to this only and can be other conditions. Therefore, when the detecting and controlling unit 120 detects that the usage or the loading status of the central processing unit 110 is low (such as smaller than a designated threshold TH1), it can send the control signal SC1 to the clock generating unit 130 to transform the input clock signal CLKin into the clock signal CLKout with a lower frequency. For example, 500MHz is lowered to 250MHz to save the power consumption of the central processing unit 110. When the detecting and controlling unit 120 detects that the usage or the loading status of the central processing unit 110 is high (such as greater than the designated threshold TH1), it can control the clock generating unit 130 to provide the clock signal CLKout with a higher frequency. In addition, the value of the designated threshold TH1 can be adjusted depending on practical demands, but this should not be a limitation of the present invention.

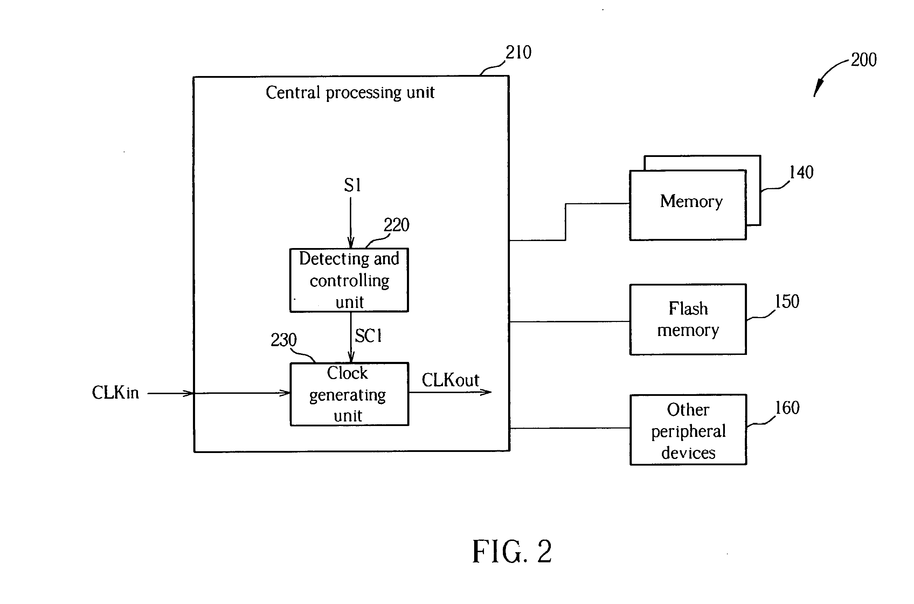

In this embodiment, the clock generating unit 130 is disposed outside the central processing unit 110, but this should not be considered as a limitation of the present invention. In other embodiments, the clock generating unit can be disposed inside the central processing unit. Please refer to FIG.2. FIG.2 is a diagram illustrating an embedded system 200 with power-saving functions according to a second embodiment of the present invention. As shown in FIG.2, a detecting and controlling unit 220 and a clock generating unit 230 of the embedded system 200 are all disposed inside a central processing unit 210.

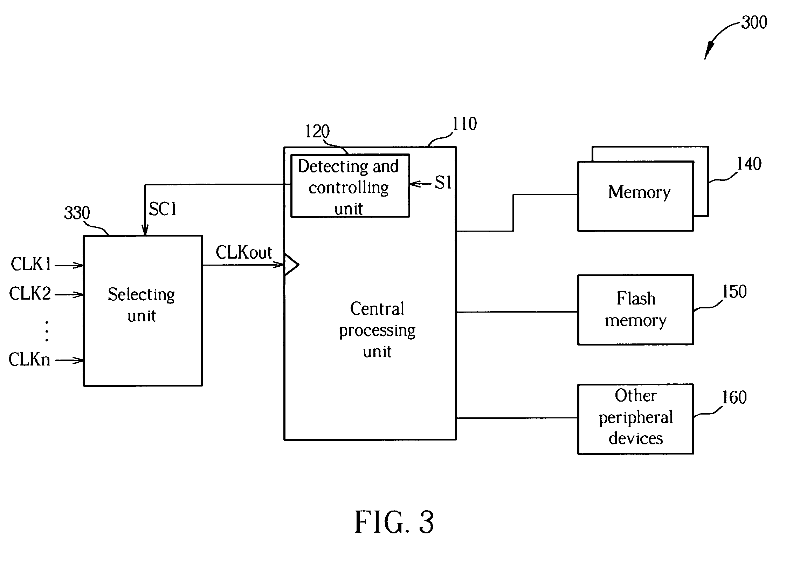

Please refer to FIG.3. FIG.3 is a diagram illustrating an embedded system 300 with power-saving functions according to a third embodiment of the present invention. The embedded system 300 in FIG.3 is similar to the embedded system 100 in FIG.1, and the difference between them is that the embedded system 300 adopts a selecting unit 330 to implement the clock generating unit. The selecting unit 330 selects one of a plurality of different input clock signals CLK1-CLKn as the clock signal CLKout according to the control signal SC1.

Be noted that the embedded systems 100, 200, and 300 disclosed in FIG.1-FIG.3 provide a power-saving mechanism suitable for active mode. Through detecting the loading status or the usage of the central processing unit to dynamically adjust the clock signal of the central processing unit, a goal of saving power can be achieved.

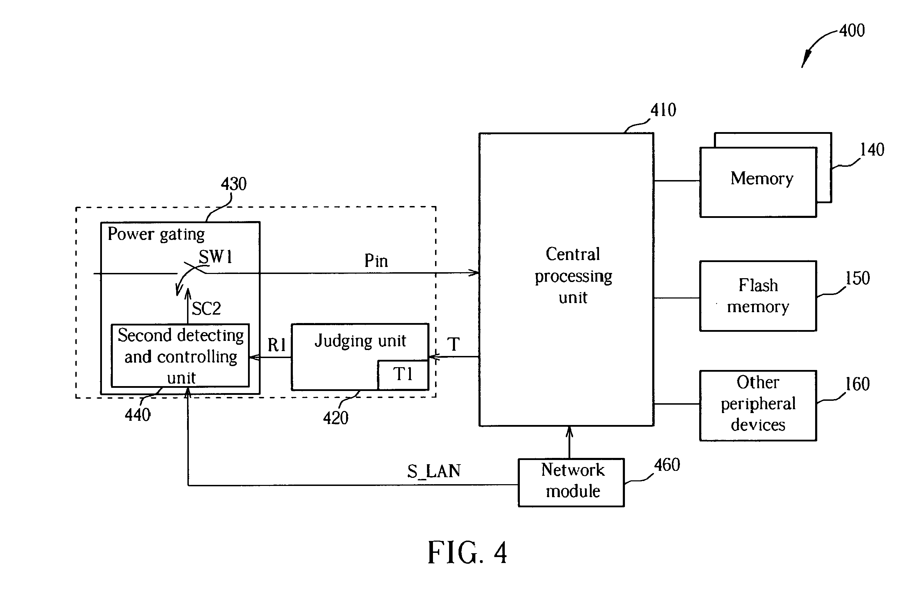

Please refer to FIG.4. FIG.4 is a diagram illustrating an embedded system 400 with power-saving functions according to a fourth embodiment of the present invention. As shown in FIG.4, the embedded system 400 includes, but is not limited to, a central processing unit 410, a judging unit 420, a power gating 430, and a network module 460. The central processing unit 410 controls operations of the embedded system 400, such as the memory 140, the flash memory 150, or other peripheral devices 160. The judging unit 420 is coupled to the central processing unit 410 for determining whether a time T that the central processing unit 410 lies in an idle status is greater than a designated time T1 to generate a judging result R1. The power gating 430 includes a power control switch SW1 and a second detecting and controlling unit 440. The second detecting and controlling unit 440 receives the judging result R1 and generates a second control signal SC2 according to the judging result R1 and a wake-on-LAN signal S_LAN. The power control switch SW1 controls an input power Pin of the central processing unit 410 according to the second control signal SC2. The network module 460 is used for transmitting the wake-on-LAN signal S_LAN.

In the following, some examples are taken for illustration. In a first condition, when the judging result R1 indicates that the time T that the central processing unit 410 lies in the idle status is greater than the designated time T1, the second control signal SC2 of the second detecting and controlling unit 440 controls the power control switch SW1 disconnected to stop outputting the input power Pin to the central processing unit 410. In a second condition, when the judging result R1 indicates that the time T that the central processing unit 410 lies in the idle status is smaller than the designated time T1, the second control signal SC2 will not control the power control switch SW1 disconnected to continue outputting the input power Pin to the central processing unit 410. In a third condition, if the second detecting and controlling unit 440 receives the wake-on-LAN signal S_LAN when the power control switch SW1 is disconnected, the second control signal SC2 controls the power control switch SW1 connected to restore to output the input power Pin to the central processing unit 410. In other words, the second detecting and controlling unit 440 controls whether to connect the power control switch SW1 according to the judging result R1 and the wake-on-LAN signal S_LAN. Therefore, if the time T that the central processing unit 410 lies in the idle status is too long, stop outputting the input power Pin to the central processing unit 410 to thereby save power. In addition, the central processing unit 410 can wake up timely to work (such as receiving the wake-on-LAN signal S_LAN).

Please note that the abovementioned embedded system 400 can be a network attached storage (NAS) or a customer premise equipment (CPE). But this should not be considered as limitations of the present invention, and it can be any embedded system provided with a network module.

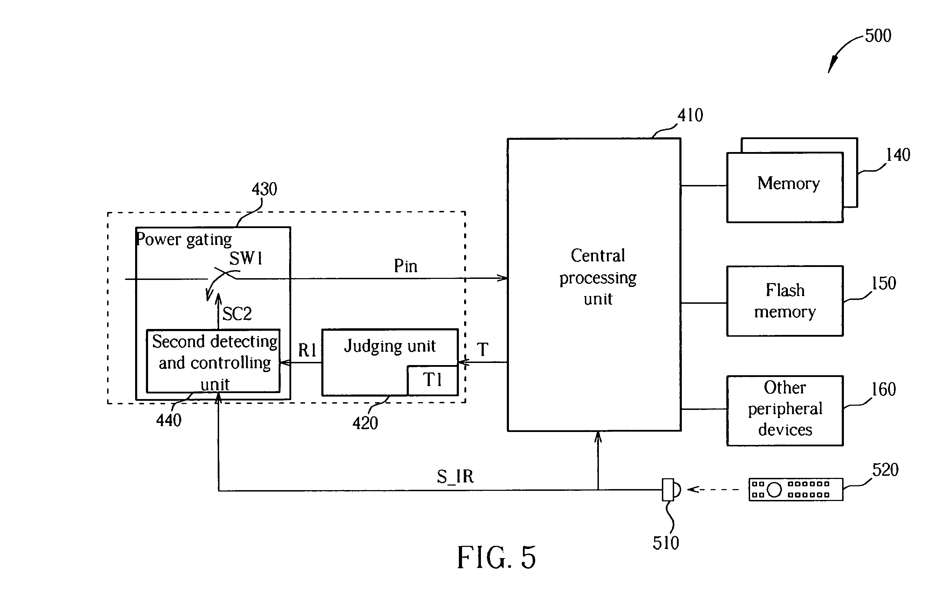

Please refer to FIG.5. FIG.5 is a diagram illustrating an embedded system 500 with power-saving functions according to a fifth embodiment of the present invention. The embedded system 500 in FIG.5 is similar to the embedded system 400 in FIG.4, and the difference between them is that the embedded system 500 further includes an infrared module 510. The infrared module 510 receives a wake-on-IR signal S_IR from an infrared remote controller 520. The second detecting and controlling unit 440 generates the second control signal SC2 according to the judging result R1 and the wake-on-IR signal S_IR.

Please note that the abovementioned embedded system 400 can be a setup box (STB) or a digital media adapter (DMA). But this should not be considered as limitations of the present invention, and it can be any embedded system provided with an infrared module.

Be noted that the embedded systems 400 and 500 disclosed in FIG.4-FIG.5 provide a power-saving mechanism suitable for sleep mode. Because the time T that the central processing unit 400 or 500 lies in the idle status has already exceeded the designated time T1, the input power Pin of the central processing unit 410 can be completely cut off to effectively save more power.

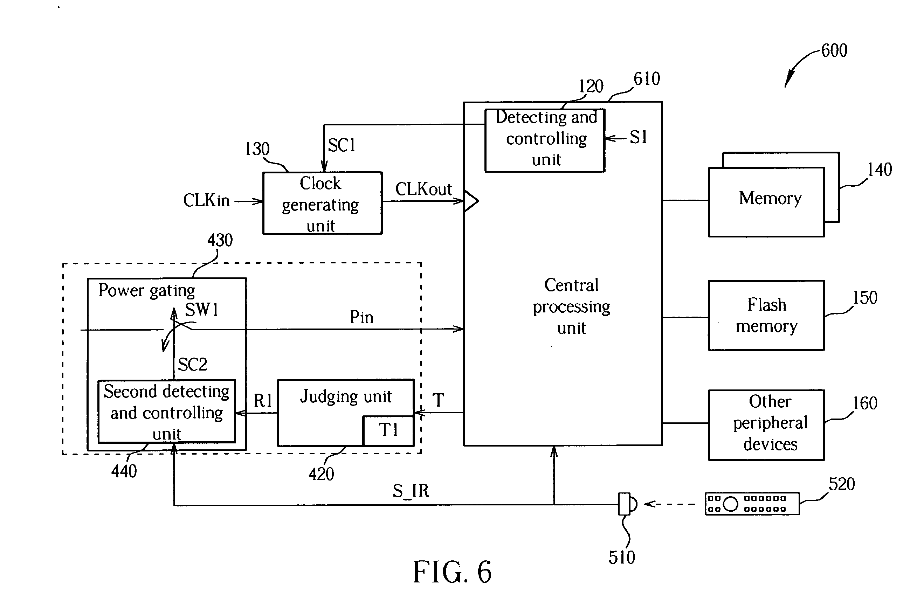

Please refer to FIG.6. FIG.6 is a diagram illustrating an embedded system 600 with power-saving functions according to a sixth embodiment of the present invention. The embedded system 600 is a combination by merging the embedded system 100 shown in FIG.1 and the embedded system 500 shown in FIG.5. In other words, the embedded system 600 possesses the power-saving functions of both the embedded system 100 and the embedded system 500. Hence, the embedded system 600 provides the power-saving mechanism suitable for both active mode and sleep mode.

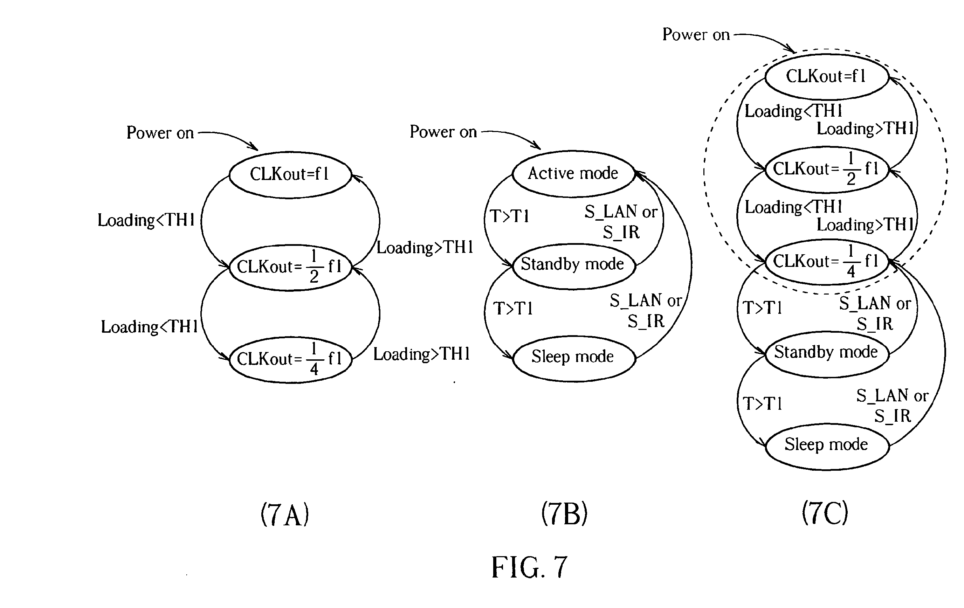

Please refer to FIG.7. FIG.7 (including 7A, 7B, and 7C) is a diagram showing the power-saving mechanism of the embedded systems shown in FIG.1 to FIG.6. 7A represents the power-saving mechanism of the embedded systems 100, 200, and 300 shown in FIG.1 to FIG.3, 7B represents the power-saving mechanism of the embedded systems 400 and 500 shown in FIG.4 and FIG.5, and 7C represents the power-saving mechanism of the embedded systems 600 shown in FIG.6. As shown in 7A, when the usage or the loading status of the central processing unit is low (such as smaller than the designated threshold TH1), dynamically decrease the frequency of the clock signal CLKout of the central processing unit. On the other hand, when the usage or the loading status of the central processing unit is high (such as greater than the designated threshold TH1), dynamically increase the frequency of the clock signal CLKout of the central processing unit. As shown in 7B, when the time T that the central processing unit lies in the idle status is greater than the designated time T1, enter the standby mode from the active mode and then enter the sleep mode from the standby mode to cut off the input power Pin of the central processing unit. When receiving the wake-on-LAN signal or the wake-on-IR signal, return to the standby mode from the sleep mode and then return to the active mode. In addition, 7C is a combination by merging 7A and 7B.

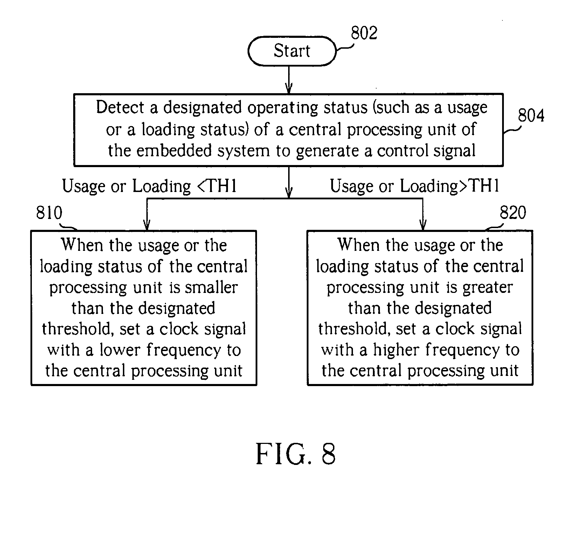

Please refer to FIG.8. FIG.8 is a flowchart illustrating a power-saving method applied to an embedded system according to an exemplary embodiment of the present invention. Please note that the following steps are not limited to be performed according to the exact sequence shown in FIG.8 if a roughly identical result can be obtained. The method includes the following steps:
- Step 802:: Start.
- Step 804:: Detect a designated operating status of a central processing unit of the embedded system to generate a control signal, wherein the designated operating status includes a usage or a loading status of the central processing unit.
- Step 810:: When the usage or the loading status of the central processing unit is smaller than the designated threshold, set a clock signal with a lower frequency to the central processing unit.
- Step 820:: When the usage or the loading status of the central processing unit is greater than the designated threshold, set a clock signal with a higher frequency to the central processing unit.

How each element operates can be known by collocating the steps shown in FIG.8, the elements shown in FIG.1 to FIG.3, and the power-saving mechanism shown in 7A. Thus further description of the steps shown in FIG.8 is omitted here for brevity.

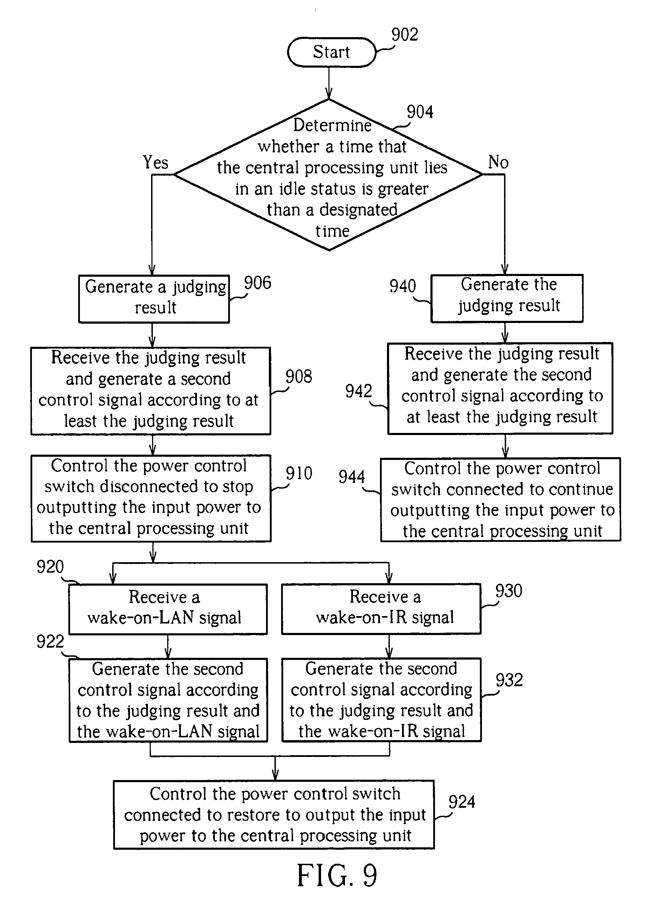

Please refer to FIG.9. FIG.9 is a flowchart illustrating a power-saving method applied to an embedded system according to another exemplary embodiment of the present invention. The method includes, but is not limited to, the following steps:
- Step 902:: Start.
- Step 904:: Determine whether a time that the central processing unit lies in an idle status is greater than a designated time. When the time that the central processing unit lies in the idle status is greater than the designated time, go to Step 906; otherwise, go to Step 940.
- Step 906:: Generate a judging result.
- Step 908:: Receive the judging result and generate a second control signal according to at least the judging result.
- Step 910:: Control the power control switch disconnected to stop outputting the input power to the central processing unit.
- Step 920:: Receive a wake-on-LAN signal.
- Step 922:: Generate the second control signal according to the judging result and the wake-on-LAN signal.
- Step 924:: The second control signal controls the power control switch connected to restore to output the input power to the central processing unit.
- Step 930:: Receive a wake-on-IR signal.
- Step 932:: Generate the second control signal according to the judging result and the wake-on-IR signal.
- Step 940:: Generate the judging result.
- Step 942:: Receive the judging result and generate the second control signal according to at least the judging result.
- Step 944:: Control the power control switch connected to continue outputting the input power to the central processing unit.

How each element operates can be known by collocating the steps shown in FIG.9, the elements shown in FIG.4 and FIG.5, and the power-saving mechanism shown in 7B. Thus further description of the steps shown in FIG.9 is omitted here for brevity. The steps 906-910 describes a condition that the central processing unit lies in the idle status for a long time, at this time, it enters sleep mode and stops outputting the input power to the central processing unit. The steps 920-932 describes a condition that the central processing unit receives a wake-up signal (such as the wake-on-LAN signal or the wake-on IR signal) after entering the sleep mode, at this time, it leaves the sleep mode to keep outputting the input power to the central processing unit.

Please note that, the steps of the abovementioned flowcharts are merely exemplary embodiments of the present invention, and in no way should be considered to be limitations of the scope of the present invention. These methods can include other intermediate steps without departing from the spirit of the present invention. Furthermore, the steps shown in FIG.8 and the steps shown in FIG.9 can be merged into a new flowchart, and thus how each element shown in FIG.6 operates can be known.

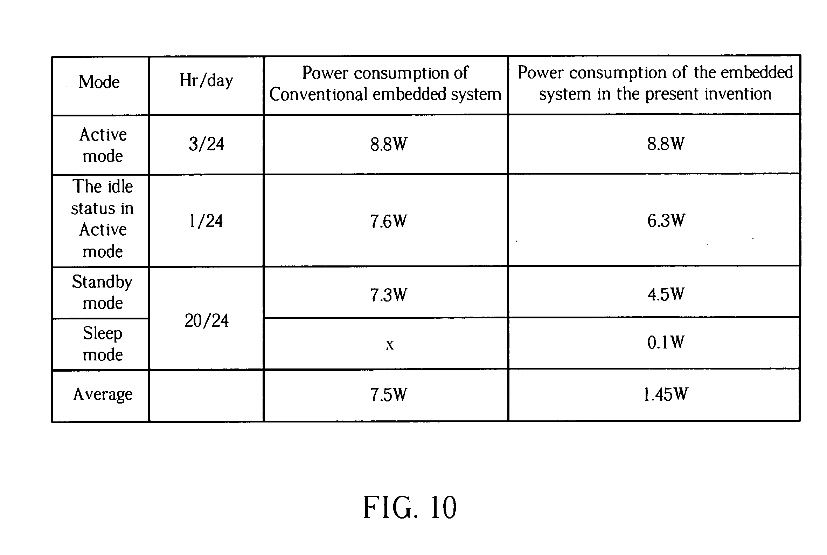

Please refer to FIG.10. FIG.10 is a table comparing the power consumption between the conventional embedded system and the embedded system disclosed in the present invention. As shown in FIG.10, the power consumption of the conventional embedded system is listed in the following: 8.8W in the active mode, 7.6W in the idle status of the active mode, and 7.3W in the standby mode (no sleep mode). The power consumption of the embedded system disclosed in the present invention is listed below: 8.8W in the active mode, 6.3W in the idle status of the active mode, 4.5W in the standby mode, and 0.1 W in the sleep mode. If the first power-saving mechanism disclosed in the present invention (i.e. the power-saving mechanism shown in 7A) is adopted, the power consumption in the idle status of the active mode can be reduced (6.3W<7.6W). If the second power-saving mechanism disclosed in the present invention (i.e. the power-saving mechanism shown in 7B) is adopted, the power consumption in the sleep mode can be reduced. For example, if a user spends only three hours on using the embedded system in one day and the embedded system is in the idle status (assuming 1 hour) and in the standby mode/sleep mode (assuming 20 hours) at the other time, the average power consumption of the conventional embedded system is approximately 7.5W and the average power consumption of the embedded system disclosed in the present invention is merely 1.45W. By comparing with them, the power consumption of the embedded system can be substantially reduced by adopting the power-saving mechanism disclosed in the present invention.

The abovementioned embodiments are presented merely for describing the present invention, and in no way should be considered to be limitations of the scope of the present invention. In summary, the present invention provides an embedded system with power-saving functions and a related power-saving method. By detecting the loading status or the usage of the central processing unit, the clock signal of the central processing unit can be dynamically adjusted to save the power consumption of the embedded system in the active mode. In addition, if the time T that the central processing unit lies in an idle status is greater than the designated time T1, control the embedded system to enter the sleep mode and completely cut off the input power of the central processing unit to effectively save more power. Furthermore, the second detecting and controlling unit with low power consumption is collocated for determining whether a wake-up signal is received to timely wake up the embedded system to take the original efficiency into account.

All combinations and sub-combinations of above-described features also belong to the invention.

## Claims

1. An embedded system (100, 200, 300, 400, 500, 600) with power-saving functions, comprising:
a central processing unit (110, 210, 410, 610), for controlling operations of the embedded system (100, 200, 300, 400, 500, 600);
**characterized by**:
a detecting and controlling unit (120, 220), disposed inside the central processing unit (110, 210, 610), for detecting a designated operating status of the central processing unit (110, 210, 610) to generate a control signal; and
a clock generating unit (130, 230, 330), coupled to the detecting and controlling unit (120, 220), for setting a clock signal to the central processing unit (110, 210, 610) according to the control signal;
and/or **characterized by**:
a judging unit (420), for determining whether a time that the central processing unit (410, 610) lies in an idle status is greater than a designated time to generate a judging result; and
a power gating (430), comprising:
a power control switch (SW1), for controlling an input power of the central processing unit (410, 610) according to a second control signal; and
a second detecting and controlling unit (440), for receiving the judging result and for generating the second control signal according to at least the judging result.

2. The embedded system (100, 200, 300, 400, 500, 600) of claim 1,
**characterized in that** the clock generating unit (130, 230, 330) is disposed outside or inside the central processing unit (110, 210, 610), and/or
**characterized in that** the clock generating unit (130, 230) is a phase lock loop (PLL) for generating the clock signal according to an input clock signal and the control signal; and/or
**characterized in that** the clock generating unit (330) is a selecting unit (330) for selecting one of a plurality of input clock signals as the clock signal according to the control signal.

3. The embedded system (100, 200, 300, 400, 500, 600) of claim 1,
**characterized in that** the second control signal controls the power control switch (SW1) disconnected to stop outputting the input power to the central processing unit (410, 610) when the judging result indicates that the time that the central processing unit (410, 610) lies in the idle status is greater than the designated time.

4. The embedded system (100, 200, 300, 400, 500, 600) of claim 1,
**characterized by**:
a network module (460), for transmitting a wake-on-LAN signal; wherein the second detecting and controlling unit (440) is further coupled to the network module (460) for receiving the wake-on-LAN signal and for generating the second control signal according to the judging result and the wake-on-LAN signal.

5. The embedded system (100, 200, 300, 400, 500, 600) of claim 4,
**characterized in that** the second control signal controls the power control switch (SW1) disconnected to stop outputting the input power to the central processing unit (410, 610) when the judging result indicates that the time that the central processing unit (410, 610) lies in the idle status is greater than the designated time; and if the second detecting and controlling unit (440) receives the wake-on-LAN signal when the power control switch (SW11) is disconnected, the second control signal controls the power control switch (SW1) connected to output the input power to the central processing unit (410, 610).

6. The embedded system (100, 200, 300, 400, 500, 600) of claim 4,
**characterized in that** the embedded system is a network attached storage (NAS) or a customer premise equipment (CPE).

7. The embedded system (100, 200, 300, 400, 500, 600) of claim 1,
**characterized by**:
an infrared module (510), for receiving a wake-on-IR signal; wherein the second detecting and controlling unit (440) is further coupled to the infrared module (510) for receiving the wake-on-IR signal and for generating the second control signal according to the judging result and the wake-on-IR signal.

8. The embedded system (100, 200, 300, 400, 500, 600) of claim 7,
**characterized in that** the second control signal controls the power control switch (SW1) disconnected to stop outputting the input power to the central processing unit (410, 610) when the judging result indicates that the time that the central processing unit (410, 610) lies in the idle status is greater than the designated time; and if the second detecting and controlling unit (440) receives the wake-on-IR signal when the power control switch (SW1) is disconnected, the second control signal controls the power control switch (SW1) connected to output the input power to the central processing unit (410, 610).

9. The embedded system (100, 200, 300, 400, 500, 600) of claim 7,
**characterized in that** the embedded system is a setup box (STB) or a digital media adapter (DMA).

10. A power-saving method applied to an embedded system (100, 200, 300, 400, 500, 600), **characterized by**:
detecting a designated operating status of a central processing unit (110, 210, 610) of the embedded system (100, 200, 300, 400, 500, 600) to generate a control signal; and
setting a clock signal to the central processing unit (110, 210, 610) according to the control signal;
and/or **characterized by**:
determining whether a time that the central processing unit (410, 610) lies in an idle status is greater than a designated time to generate a judging result;
receiving the judging result and generating a second control signal according to at least the judging result; and
controlling an input power of the central processing unit (410, 610) according to the second control signal.

11. The power-saving method of claim 11 or the embedded system (100, 200, 300, 400, 500, 600) of claim 1, **characterized in that** the designated operating status comprises a usage of the central processing unit (110, 210, 610); and/or
**characterized in that** the designated operating status comprises a loading status of the central processing unit (110, 210, 610).

12. The power-saving method of claim 10, **characterized in that** the step of generating the clock signal according to the control signal comprises:
generating the clock signal according to an input clock signal and the control signal; and/or
selecting one of a plurality of input clock signals as the clock signal according to the control signal.

13. The power-saving method of claim 10, **characterized in that** the step of controlling the input power of the central processing unit (410, 610) according to the second control signal comprises:
when the judging result indicates that the time that the central processing unit (410, 610) lies in the idle status is greater than the designated time, the second control signal stops outputting the input power to the central processing unit (410, 610).

14. The power-saving method of claim 10, **characterized by**:
receiving a wake-on-LAN signal; and
the step of generating the second control signal according to at least the judging result comprises:
generating the second control signal according to the judging result and the wake-on-LAN signal.

15. The power-saving method of claim 10, **characterized by**:
receiving a wake-on-IR signal; and
the step of generating the second control signal according to at least the judging result comprises:
generating the second control signal according to the judging result and the wake-on-IR signal.
